# EUROPEAN PATENT APPLICATION

(11) **EP 4 258 197 A1**
(43) Date of publication of application: **11.10.2023**
(21) Application number: 23166883.1
(22) Date of filing: 05.04.2023
(51) Int. Cl.: G06Q 10/1093, G06Q 10/20

(54) **SYSTEMS AND METHODS FOR MAINTENANCE CALENDARING**

(30) Priority: 06.04.2022 US 202217714357
(71) Applicant: Aspen Ventures Limited, V92 X106 Tralee (IE)
(72) Inventor: RYAN, Sean, Sackville, V92 KA44 (IE); LYNCH, Patrick, Tralee, V92 X016 (IE)
(74) Representative: Haseltine Lake Kempner LLP

(57) **Abstract**

Systems and methods are described for rules-based scheduling and calendaring of property maintenance tasks based on manual data inputs by a property owner or manager and external data source inputs from public records databases. A dynamic calendar of maintenance tasks may be generated and updated in real time in response to changes to the rules resulting from changing user preferences or external database updates. In preferred embodiments, the invention described herein is useful for the seamless scheduling of property maintenance tasks according to local requirements and climate and weather data and fulfillment of scheduled tasks in a timely manner. A system of the present invention ideally comprises a graphical user interface useful for data entry and calendar visualization. The methods described herein include initiating a call to action using the system, vendor selection, vendor assignments and invoicing and payment functions.

## Description

The present invention was made without the benefit of federal funding.

### BACKGROUND OF THE INVENTION

Homeowners and property managers must maintain multiple structures and systems throughout the life cycles of their properties. The current state of the art is in need of systems and methods to allow homeowners and property managers to manage properties on an ongoing basis through generation of a maintenance calendar with alerting functions.

Multiple data inputs exist that can be used as inputs for systems and methods to generate calendars and fulfillment functions for the execution of services necessary for efficient property maintenance. Such data may be selected, for example, from inputs such as local real property records (city or county); tax assessment records; real estate data (e.g., multiple listing service (MLS), syndicated data or other sources); construction permit data; data on similar model properties; appliance maintenance schedules; material, appliance and parts expected life data and anticipated replacement dates; data inputs from property owners, current and past; vendor data; location data, weather data, and survey data.

While these data are accessible by the public in many instances, a system does not exist in the state of the art that utilizes these inputs for the creation of maintenance calendars for homeowners and property owners. These data inputs could be used to generate updates on property attributes, resolve conflicts between aging data and new data, and store this updated information in a property database that can be leveraged to create maintenance calendars based on the property attributes and user preferences which can be governed by rules affected by the resolution of data conflicts as well as the management of the calendar itself by the homeowner or property manager. No such system exists in the current state of the art.

Current maintenance management solutions are not based on real time execution of rules based on triggers that are linked to fully dynamic home characteristics that are completely customizable as is an object of the present invention. This differs from calendaring technologies like auto-service scheduling, for example, because rules are typically applied based on specific makes and models of cars, and generally change little over a car's lifetime. Also lacking in the current state of the art is a solution that integrates weather and climate data into rulemaking to create robust service windows based on task, location and time of year.

### BRIEF SUMMARY OF THE INVENTION

The present invention is that of systems and methods for generating a calendar, and more particularly a rolling calendar, wherein the systems described herein are in network communication with weather applications, enabling the automatic rescheduling of maintenance tasks when inclement weather impacts the ability to carry out certain tasks as well as automatic ordering of services based on the weather. Integration of service recency, customer preferences, home characteristics, and service history to create a customized service schedule for each service that meets the service windows is an object of the invention of the present disclosure.

This automation is further enabled through network communication with real property databases and other available public record resources, along with manual inputs from property owners and managers, as well as inputs impacting maintenance schedules such as weather map inputs and expected weather patterns for the location of the property. For example, a calendar generated using a system according to the present disclosure might update automatically in response to weather patterns in the location or weather updates or updates to property characteristics that require changes to maintenance schedules. Changes to time settings, rules governing maintenance activities or data inputs impacting such rules may be used to trigger the execution of maintenance activities.

In addition to the automated creation and ongoing rolling updates of the maintenance calendar, the user has the ability to choose what action to take against the item in the calendar. They can choose to hire a pro, mark it to "do it myself", ignore the item for a period of time, delete the item or mark it as done. They may also indicate that it will be done by a home pro they use themselves without using the fulfillment option. All options are color-coded and icon-coded so that a user can immediately ascertain the status of the maintenance item.

The calendaring is further enhanced by the ability to create recurring services for automatic reordering with a home pro as well as keeping a history of all work carried out thus enabling a creation of a property maintenance history report and history data that also feeds into future calendaring.

In addition to calendaring, fulfillment activities may be automatically scheduled base on a calendar generated using a system as described herein according to rules implemented within the system, which may be updated when data inputs change in real time. Over time, a fulfillment schedule may be developed for a variety of activities based on service history and real time impacts to the rules used to develop the schedule.

For example, an exemplary system of the present disclosure may include a web or mobile application with a feature enabling a user to initiate a call to action (CTA) that results in a bid request being transmitted to one or more vendors capable of handling the required task. Bids may be solicited in this way and services may be contracted by the user, resulting in the assignments of maintenance tasks to various agents for scheduling and execution. When the scheduled work is completed a user may be prompted to accept the work product or resolve any issues that arose during the execution. E-commerce solutions may be incorporated into the system as well for seamless invoicing and payment for services.

### BRIEF DESCRIPTION OF THE DRAWINGS

FIG. 1 is a block diagram illustrating the data inputs and application of rules implemented via an exemplary system of the present disclosure.
FIG. 2 is a block diagram illustrating the implementation of rule changes based on data inputs of an exemplary system of the present disclosure.
FIG. 3 is a simplified fulfillment flow for the execution of maintenance services as enabled by an exemplary system of the present disclosure.
FIG. 4 illustrates a view available on a graphical user interface (GUI) according to the present disclosure, wherein upcoming service bookings are selected for viewing.
FIG. 5 illustrates a view similar to FIG. 4, wherein completed service bookings are selected for viewing instead of upcoming service bookings.
FIG. 6 illustrates a calendar view according to the present disclosure, wherein daily and monthly maintenance tasks appear.
FIG. 7 illustrates a calendar view similar to that of FIG. 6, with a different date being selected for the viewing of daily maintenance bookings.
FIG. 8 illustrates a calendar view as appears in FIG. 7, but with monthly maintenance tasks selected for status updates or deletion.

### DETAILED DESCRIPTION OF THE INVENTION

Systems and methods according to the present disclosure involve the use of software programming and modern system architectures to implement rule-based scheduling and calendaring of property maintenance activities with automated updating capability. The rules used to govern the scheduling of tasks may be based on the characteristics of the property, appliances and materials, involved and may also respond to changes to external inputs such as those from weather databases. For example, a house having a wooden deck may be subject to a rule requiring the deck to be stained or treated each year to avoid water damage, and that task might be rescheduled based on weather inputs to avoid scheduling the task for execution during a rainstorm or winter months. Another example is automated ordering of snow-removal services after, or in anticipation of, a snowstorm in the vicinity of the property.

Maintenance task descriptions may be used to populate a database from which tasks are selected and scheduled based on rules, or in some cases not scheduled based on rules. Continuing with the previous example, a house with no wooden deck would not be scheduled for staining or treatment as described above. In certain preferred embodiments, the rules used to create the calendars involve identifying the nearest date that the relevant service is in season based on the weather, and an appropriate amount of time that has passed since the service was last carried out. This enables property managers to schedule services no more frequently than what is desired, but as soon as possible during the appropriate season after an acceptable amount of time has passed.

It is an object of the invention to incorporate the preferences of property managers into their own maintenance schedules based on experience and the like. For example, when systems such as air conditioners or furnaces are used more heavily in areas with higher than average or lower than average temperatures, a manufacturers service interval recommendation may not be accurate due to heavy use. These preferences can be incorporated into the scheduling rules using a system as described herein.

Similarly, rules may be prioritized to customize a maintenance calendar using a system and method according to the present disclosure. Services may be recommended from a database of services as mentioned above, which may include more services than are applicable or needed by a particular property owner or manager. A system administrator, for example, may develop a prioritization schedule based on the urgency, risk and cost of fulfilling various services. This allows managers to space out the scheduling of the various services based on property data and user preferences. In cases where the need for services is seasonal in nature, such as maintaining a furnace prior to the onset of cold weather, prioritization of calendar rules will cause a service recommendation coinciding with a time prior. Since rules may be similar for managers in the same geographic regions or with similar property types, profiles can be generated to automate the scheduling process to whatever degree a user might like. The user will also have additional choices around maintenance items that are in the calendar and can choose to hire a professional, do it themselves, delete, postpone (snooze) or mark as complete.

Application of rule prioritization to balance service load over time for each individual user, potentially based on user preferences, and to ensure that the most critical work is completed first, is enabled by the invention of the present disclosure. In most systems, such as auto-servicing, there are simply a list of services that *must* be done (i.e., they are due or overdue). The prioritization rules also account for limited service windows to dynamically optimize and re-optimize a schedule for each property. Load could be restricted by the user or by default rules, and load could be measured by number of services or a coded parameter, such as the number of hours it takes to perform a task, thereby allowing a homeowner to indicate they want to spend a limited number of hours per week or weekend on home maintenance.

Rule prioritization allows for rule execution and scheduling, such that if a new service is introduced (or an existing service is removed or rescheduled) because a rule executes or an actor (vendor, homeowner, etc.) makes a change, the system can automatically update. Automatic updates should reconfigure the calendar, but without modifying services that have already been scheduled or approved by the homeowner or vendors. In other words, some services might be fixed, while others might be moved to create a new schedule. This might happen if a new high priority service is introduced (which shifts back the recommended dates of other services), or if an existing high priority service is removed (which could shift forward the recommended dates of other services).

As well as the automated calendar the approximate costs of the services in the calendar that are not marked as "do it myself" can be estimated thus providing the homeowner or property manager with an estimate of the ongoing and anticipated maintenance costs for the property and enabling the work to match available budgets in terms of maintenance priorities and choices.

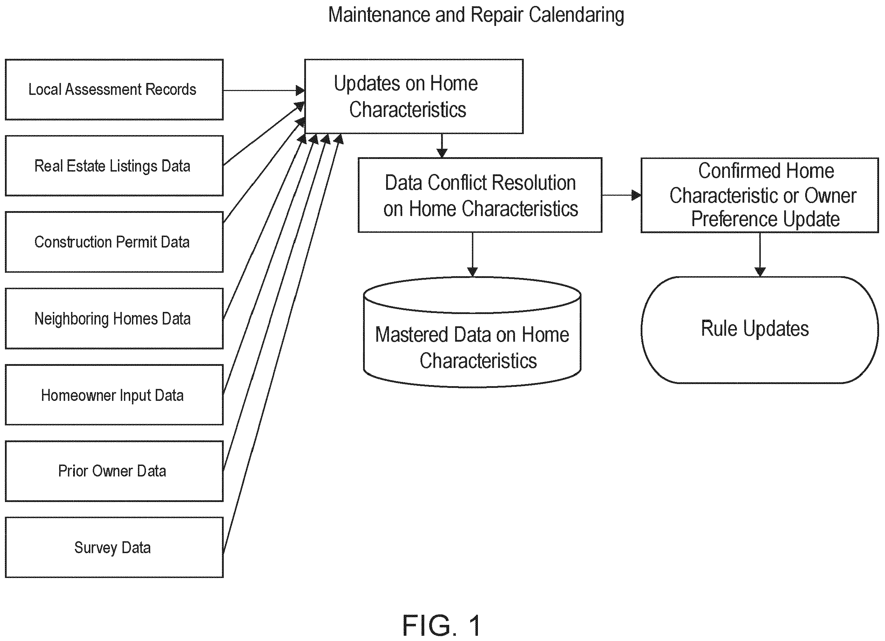

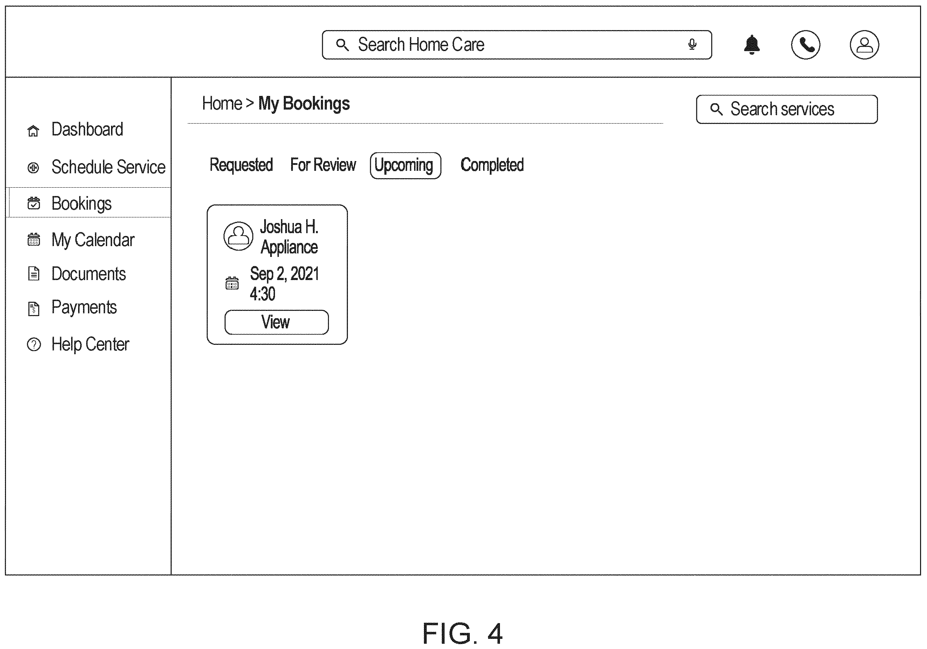

To better illustrate the systems and methods contemplated by the present invention, it is useful to refer to the accompanying drawings. Turning first to FIG. 1, using a home as an example, updates on home characteristics may be generated within a system of the present disclosure based on local assessment records, real estate listings data, construction permit data, neighboring homes data, appliance data, materials and components data, homeowner input data, prior owner data or survey data. One of ordinary skill in the art will recognize that these serve as non-limiting examples of data inputs that can be used to automatically update home characteristics in a database according to the present invention. Data conflicts can then be resolved between sources, resulting in mastered data on home characteristics. Once checked by the homeowner and confirmed, a system according to the present invention may update the rules applicable to various maintenance tasks affected by changes over time, resulting in ongoing optimization of a rolling maintenance calendar useful to the homeowner for scheduling purposes, as illustrated in FIGs. 4-8 of the accompanying drawings.

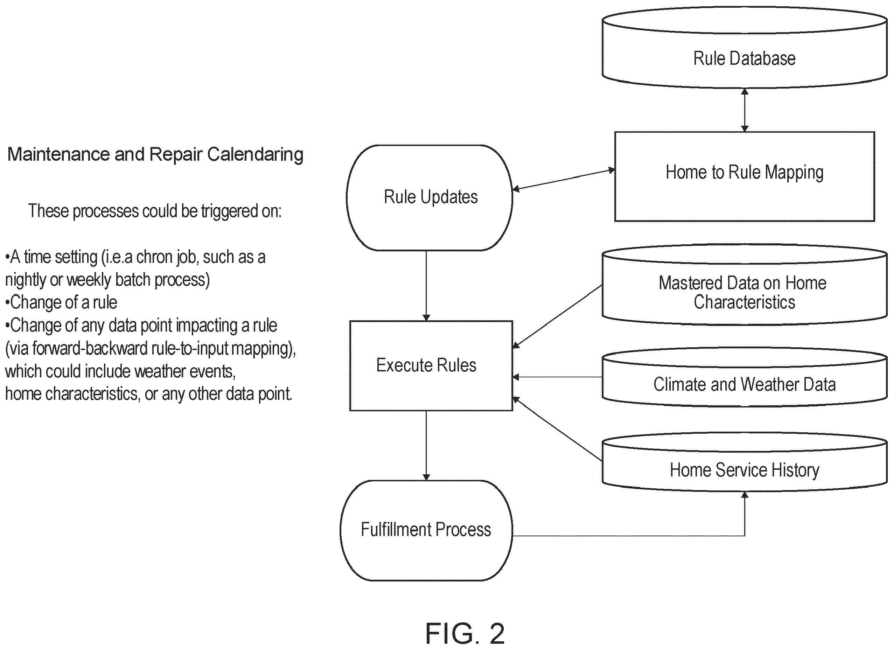

Turning now to FIG. 2, rule updates as mentioned with reference to FIG. 1 may be mapped to the home and cause updating of a rule database. Following updates, rules are executed in accordance with the updates based on the mastered data on home characteristics, climate and weather data and home service history, as seen on the right of FIG. 2, and may also trigger a fulfillment process that can be automated by the system. As maintenance tasks are fulfilled, the home service history is updated and calendars are updated accordingly.

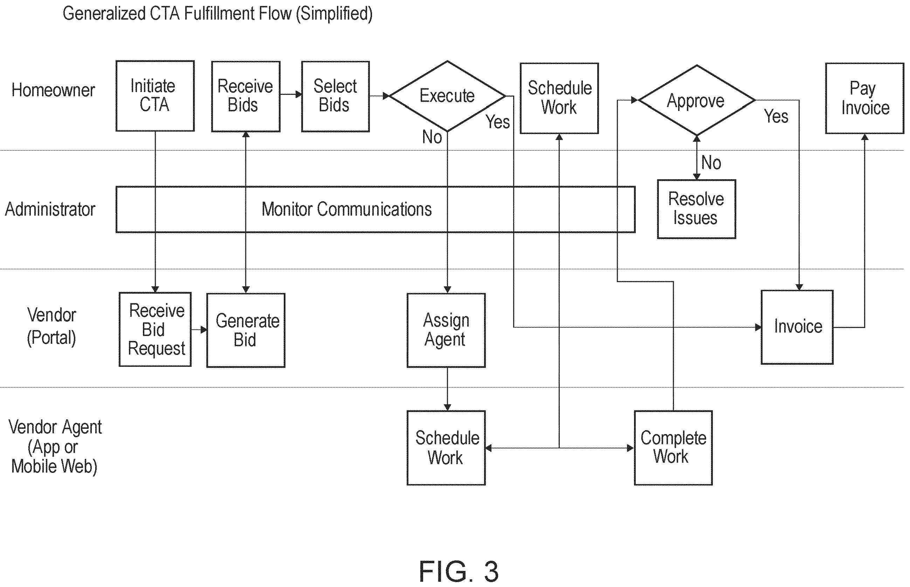

A generalized CTA fulfillment flow is shown in FIG. 3 in simplified form. A homeowner may initiate a CTA, which is monitored at the administrator level or by a customer service team, which may send out bid requests on the homeowner's behalf. Vendors may then bid on services and send them to the homeowner for selection and execution. Agents may be assigned and work scheduled and completed seamlessly once the decision to execute is made. Once the work is completed it may be either approved by the homeowner, or if issues exist, they may be teed up for resolution. At the end, in a preferred embodiment, a system may generate an invoice and allow for automated payment.

As one of ordinary skill in the art will appreciate, a system of the present disclosure will comprise software program instructions tangibly stored on a non-transitory computer readable medium for execution by a connected microprocessor in response to user inputs and other data inputs from external sources. A connected database of information on the property being monitored and associated rules used for maintenance calendaring will also be included in the system, with all of the above components being in network communication, either within a local network or among networks via the Internet. A web or mobile application (with application programming interface) will be provided to allow users to interact with the system, schedule tasks, make updates, enter profile information and otherwise execute all the various methods of calendaring and fulfillment contemplated herein.

As discussed above, each service may be scheduled according to one or more rules contained within a rules database, with the rules capable of being checked for consistency with other data inputs. In some cases, the rules may be checked against weather data inputs in order to generate a calendar allowing for tasks to be scheduled as soon as the weather permits, subject to deviations by users of the system based on experience with specific properties. Ideally a system according to the present disclosure is completely customizable and gives the homeowners total control over seeing that required tasks are completed in the desired manner.

It is an object of the invention of the present disclosure to equip homeowners and property managers with an interactive calendar display for viewing on a website or mobile device equipped with an application programming interface (API) configured for bidirectional communications with a system according to the present disclosure. A system according to the present disclosure will include a web server for access to the applications executed according to the methods of the present disclosure via the Internet from a computer configured with a user account for web-based communications.

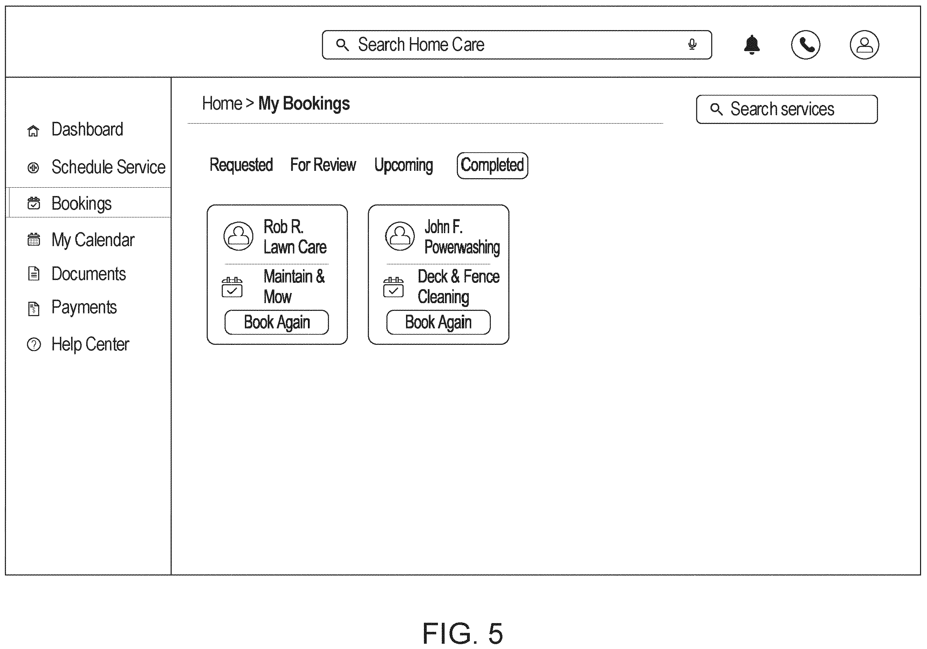

FIG. 4 illustrates a simplified view of an exemplary graphic display according to the present disclosure. In this embodiment, views may be selected form a list (appearing on the left) including dashboard, schedule service, bookings, my calendar, documents, payments and help center views. In this example bookings are selected for viewing and may be filtered according to whether they are requested, for review, upcoming or completed, upcoming having been selected in this illustration. When selected for viewing, the details of appointments booked for the completion of maintenance tasks appear and may be expanded for viewing additional details. The entire site and types of services also appear as searchable, as will be appreciated by one of ordinary skill in the art. Turning now to FIG. 5, completed bookings are selected for viewing as opposed to upcoming bookings as illustrated in FIG. 4. The service professionals may be booked again for future service provision easily by selecting "Book Again" and supplying the date the next service is desired.

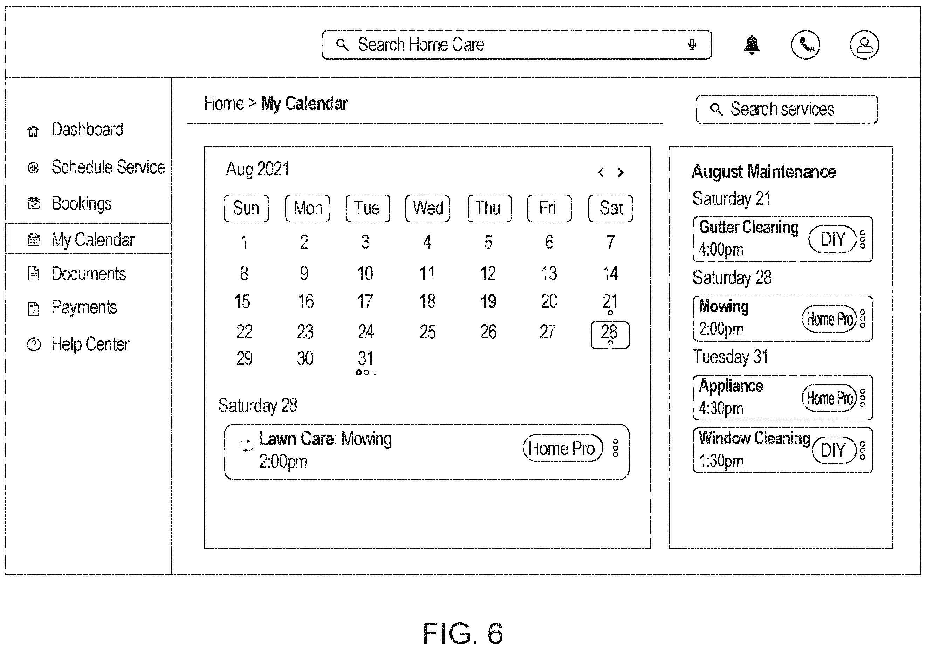

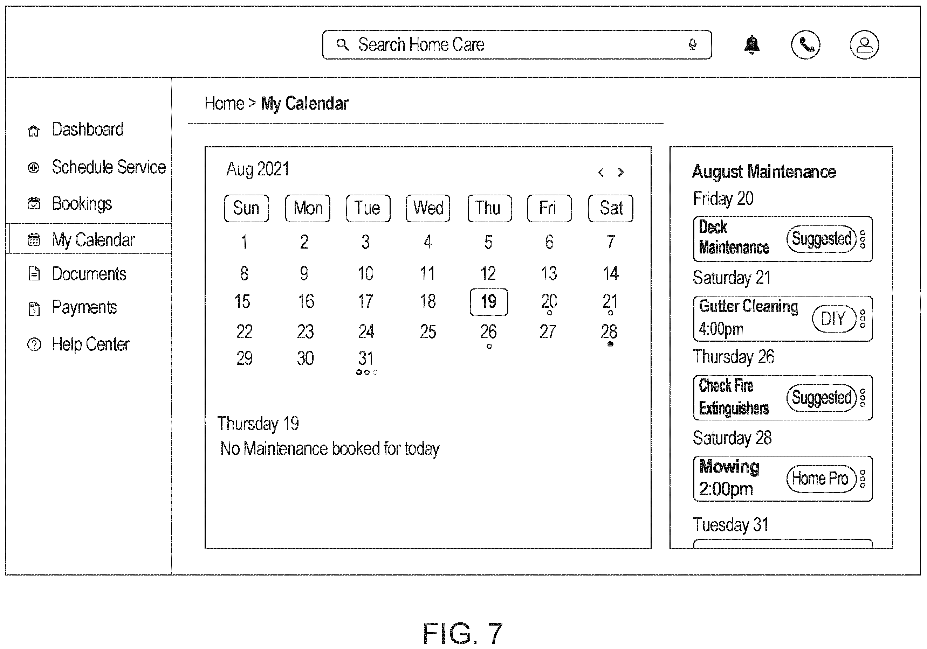

FIG. 6 illustrates a calendar view in simplified form according to the present disclosure. Each day of the month shown includes an indicator as to whether service is scheduled for that date, and when selected, the scheduled service becomes visible below in greater detail. In this example, August 28, 2021 is selected for expanded view and it can be seen that lawn care is scheduled for 2:00 PM on that date with a home pro. A list view appears to the right with dates on which services are scheduled and a list of scheduled activities for those dates, along with an indicator as to whether the property manager or homeowner will handle the task (DIY) or a home pro is scheduled. Similarly, August 19, 2021 is selected for expanded view in FIG. 7 and it can be seen that no maintenance is booked for that date.

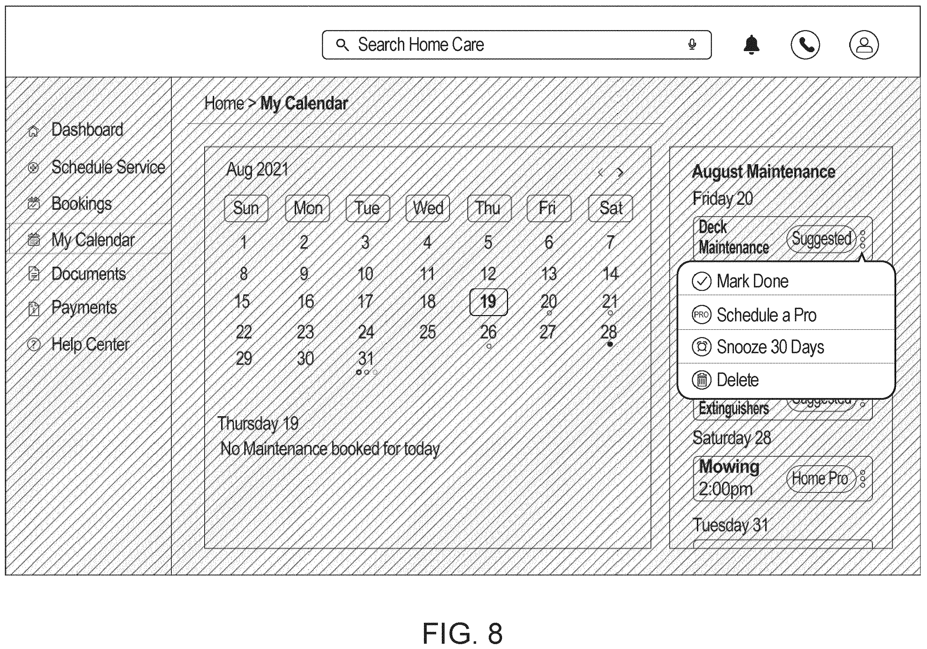

In FIG. 7, following the execution of software instructions in accordance with the methods of the present invention, all based on rules and user preferences as explained previously, the service listing has been updated (compare to FIG. 6) based on inputs from the data sources in communication with the system and rules established according to the data inputs and user inputs. As a result, new suggested maintenance tasks appear in the list and may be selected by the user for scheduling, ignored or deleted. If scheduled, a user then may elect to schedule to handle the task or schedule a home pro to handle it. In FIG. 8, for example, the newly suggested desk maintenance task that appeared in FIG. 7 has been selected and marked as done by the user.

The basic architecture of a system as described herein, as will be understood by one of ordinary skill in the art, will include a database including the mastered data on home characteristics as explained in connection with FIG. 1, which is compiled when software instructions are executed by a connected microprocessor to resolve conflicts between data from the multiple data inputs accessed by the system and user inputs, which may then be updated manually by the user. Instructions reflecting the updated rules are then executed in order to display the visual outputs represented in FIGs. 4-8 and allow manual user interaction from a connected computer, or a smartphone or tablet configured with a supplied mobile app according to the present disclosure. Fulfillment vendors in communication with a system as described herein via a provided vendor API may then be selected to provide desired services and invoice the homeowner or property manager according to the methods explained in connection with FIG. 3. These and other features and benefits of the present disclosure will be apparent to one of ordinary skill in the art.

## Claims

1. A system for calendaring property maintenance tasks, the system comprising:
a software module tangibly stored on a non-transitory computer readable medium in communication with public databases containing property data inputs specific to a property, the first software program comprising instructions which when executed by a connected microprocessor cause the processor to:
compare the property data inputs and resolve any conflicts therebetween, thereby generating mastered data representing characteristics of the property;
populate a master database with the mastered data;
update rules associated with the scheduling of maintenance tasks for the property based on the mastered data and manual user inputs; and
generate a calendar of maintenance tasks for the property for display on a graphical user interface (GUI).

2. The system of claim 1, wherein the one or more property data inputs are selected from the group consisting of local assessment records, real estate listings, construction permit records, neighboring homes data, homeowner input data, prior homeowner data, appliance maintenance schedules, material data, appliance and parts expected life data and anticipated replacement dates, survey data, weather databases and combinations thereof.

3. The system of claim 1, wherein the manual user inputs are from an owner or manager of the property.

4. The system of claim 1, wherein the GUI is displayed on a website in response to a user request made to a web server over the Internet from a computer in network communication with the software module; or
wherein the GUI is displayed on a device comprising a mobile application configured with an application programming interface (API) in network communication with the software module.

5. The system of claim 1, wherein a user may change the calendar of maintenance tasks by rescheduling or deleting the maintenance tasks from the calendar.

6. The system of claim 1, further comprising a vendor portal in network communication with the system, wherein a vendor may bid on the execution of a maintenance task through the vendor portal.

7. The system of claim 6, wherein a user may hire the vendor for the completion of the maintenance task.

8. The system of claim 7, wherein the vendor may invoice the user for completion of the maintenance task.

9. The system of claim 8, pay the vendor for the completion of the maintenance task electronically.

10. A method for scheduling and managing property maintenance tasks, the method comprising:
viewing calendar of maintenance tasks generated on the GUI according to claim 1;
selecting a maintenance task; and
taking an action selected from the group consisting of marking the maintenance task as completed, rescheduling the maintenance task or deleting the maintenance task.

11. The method of claim 10, wherein the GUI is displayed on a website in response to a user request made to a web server over the Internet from a computer in network communication with the software module, the maintenance task is selected using the website, and the action is taken using the website.

12. The system of claim 1, wherein the GUI is displayed on a device comprising a mobile application configured with an application programming interface (API) in network communication with the software module, the maintenance task is selected using the website, and the action is taken using the website.

13. A method of bidding on the execution of a maintenance task, the method comprising:
providing a vendor portal according to claim 6; and
bidding on the execution of a maintenance task through the vendor portal.

14. A method of hiring a vendor for the execution of a maintenance task, the method comprising accepting a bid for execution of the maintenance task made according to claim 13.

15. A method of invoicing a property manager or owner following the execution of a maintenance task, the method comprising:
transmitting an invoice to the property manager or owner, wherein the property manager or owner was responsible for hiring a vendor according to claim 14;
wherein the method may optionally further comprise the step of the property managing or owner paying the vendor for completion of the property maintenance task.
